(19) Europäisches Patentamt / European Patent Office / Office européen des brevets

(11) **EP 4 047 287 A1**

(12) **EUROPEAN PATENT APPLICATION**
published in accordance with Art. 153(4) EPC

(43) Date of publication:
**24.08.2022 Bulletin 2022/34**

(21) Application number: **20876645.1**

(22) Date of filing: **03.04.2020**

(51) International Patent Classification (IPC):
***F25B 1/00*** *(2006.01)*

(52) Cooperative Patent Classification (CPC):
**F25B 1/00**

(86) International application number:
**PCT/JP2020/015260**

(87) International publication number:
**WO 2021/075075 (22.04.2021 Gazette 2021/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.10.2019 PCT/JP2019/041225**

(71) Applicant: **MITSUBISHI ELECTRIC
CORPORATION
Chiyoda-ku
Tokyo 100-8310 (JP)**

(72) Inventors:
• **NISHIYAMA, Takumi
Tokyo 100-8310 (JP)**
• **MURATA, Kenta
Tokyo 100-8310 (JP)**

(74) Representative: **Pfenning, Meinig & Partner mbB
Patent- und Rechtsanwälte
Theresienhöhe 11a
80339 München (DE)**

(54) **REFRIGERATION CYCLE DEVICE**

(57) A refrigeration cycle apparatus according to the present disclosure includes a refrigeration circuit which includes a compressor, an outdoor heat exchanger, an indoor heat exchanger, and an expansion valve, and refrigerant is enclosed in the refrigeration circuit. The refrigerant contains three components R32, HFO1123, and R744 and, in a composition diagram in which a mass ratio between the three components is represented by triangular coordinates, the mass ratio between the three components falls in a range enclosed by a first straight line connecting a point A to a point B, where the point A represents 46% by mass of R32, 54% by mass of HFO1123, and 0% by mass of R744, and the point B represents 46% by mass of R32, 37.2% by mass of HFO1123, and 16.8% by mass of R744, a second straight line connecting the point A to a point C, where the point C represents 0% by mass of R32, 100% by mass of HFO1123, and 0% by mass of R744, a third straight line connecting the point C to a point D, where the point D represents 0% by mass of R32, 85.7% by mass of HFO1123, and 14.3% by mass of R744, and a first curve connecting the point B to the point D. All the three components each have a mass ratio of more than 0% by mass.

FIG.2

EP 4 047 287 A1

**Description**

TECHNICAL FIELD

The present disclosure relates to a refrigeration cycle apparatus.

BACKGROUND ART

Refrigerants that have been used for refrigeration cycle apparatuses such as air conditioner and refrigerator are those such as chlorofluorocarbon (CFC) and hydrochlorofluorocarbon (HCFC). Refrigerants containing chlorine such as CFC and HCFC, however, are currently restricted in use, because they have a significant influence on the ozone layer in the stratosphere (influence on global warming).

In view of this, hydrofluorocarbon (HFC) based refrigerant that is chlorine free and has a smaller influence on the ozone layer, i.e., has a lower global warming potential (GWP), has become used as refrigerant.

As examples of the HFC based refrigerant, difluoromethane (also called methylene fluoride, Freon-32, HFC-32, R32, for example, and referred to as "R32" hereinafter), tetrafluoroethane, R125 (1,1,1,2,2-pentafluoroethane), R410A (a pseudoazeotropic refrigerant mixture of R32 and R125), for example, are known.

Even the HFC based refrigerant, however, has a problem that it does not meet GWP regulations such as the regulations (less than or equal to 15% of the GWP of R410A, less than or equal to 46% of the GWP of R32) under the Montreal Protocol and the F-gas regulations under the Kyoto Protocol, for example. There is therefore a need for a refrigerant having a still lower GWP.

As a refrigerant having a lower GWP than that of the HFC based refrigerant, hydrofluoroolefin (HFO) based refrigerant is known.

As examples of the HFO based refrigerant, trifluoroethylene (also called 1,1,2-trifluoroethen, HFO1123, R1123, for example, and referred to as "HFO1123" hereinafter, having a GWP of about 0.3), 2,3,3,3-tetrafluoropropene (also called 2,3,3,3-tetrafluoro-1-propene, HFO-1234yf, R1234yf, for example, and referred to as "R1234yf' hereinafter), and (E)-1,2-difluoroethylene (also called HFO-1132(E), 'R1132(E)"), for example, are known.

Use of a refrigerant mixture containing an HFC based refrigerant and an HFO based refrigerant for refrigeration cycle apparatuses is also under study. As an example, PTL 1 (Japanese Patent Laying-Open No. 2015-034296) discloses that a refrigerant mixture containing R32 and HFO 1234yf is applied to a refrigeration cycle apparatus.

The HFO based refrigerant, however, has a relatively large pressure loss, may therefore cause degradation of the performance of the refrigeration cycle apparatus, and particularly has a problem that there is a high possibility of causing degradation of the performance of a refrigeration cycle apparatus of the direct expansion system in which an outdoor unit and an indoor unit are arranged separately from each other. The diameter of pipes may be increased to reduce the pressure loss and thereby suppress degradation of the performance. In this case, however, existing pipes cannot be used and thus the cost for new pipes is required.

In view of this, a refrigerant mixture containing carbon dioxide (R744) is also under study, with the purpose of suppressing increase of the pressure loss while reducing the GWP. For example, PTL 2 (Japanese Patent Laying-Open No. 2004-198063) discloses a refrigeration cycle apparatus for which a zeotropic refrigerant mixture containing R32 and carbon dioxide (R744) is used.

CITATION LIST

PATENT LITERATURE

PTL 1: Japanese Patent Laying-Open No. 2015-034296
PTL 2: Japanese Patent Laying-Open No. 2004-198063

SUMMARY OF INVENTION

TECHNICAL PROBLEM

In such a refrigerant mixture containing R744, however, if the content of R744 increases, the temperature gradient of the refrigerant mixture (temperature difference between the temperature at which evaporation or condensation starts and the temperature at which evaporation or condensation ends in a heat exchanger, i.e., the temperature difference between saturated liquid and saturated vapor) could reach a temperature of approximately 25°C at the maximum.

Accordingly, there is a high possibility that frost formation occurs in a refrigerant circuit during operation, particularly a high possibility that frost formation occurs during evaporation in an air conditioner or the like. Such a problem may arise if the refrigerant mixture containing R744 is used for a refrigeration cycle apparatus such as air conditioner.

Moreover, increase of the R744 content causes decrease of the critical temperature (highest temperature that does not cause supercritical state) of the refrigerant mixture. If the critical temperature becomes lower than the operating temperature of the refrigeration cycle apparatus, the refrigerant mixture would be used in the supercritical region during operation of the refrigeration cycle apparatus, and therefore, the refrigerant mixture cannot be used in the state of a gas-liquid two-phase state having a high thermal conductivity, resulting in a problem that the performance of the refrigeration cycle apparatus is degraded.

The present disclosure is given in view of the above problems, and an object of the present disclosure is to provide a refrigeration cycle apparatus capable of suppressing frost formation and performance degradation, for example, while reducing the influence on global warming.

SOLUTION TO PROBLEM

A refrigeration cycle apparatus according to the present disclosure includes a refrigeration circuit, the refrigeration circuit includes a compressor, an outdoor heat exchanger, an indoor heat exchanger, and an expansion valve, and refrigerant is enclosed in the refrigeration circuit.

The refrigerant contains three components that are R32, HFO1123, and R744,

in a composition diagram in which a mass ratio between the three components is represented by triangular coordinates, the mass ratio between the three components falls in a range enclosed by
a first straight line connecting a point A to a point B, where the point A represents 46% by mass of R32, 54% by mass of HFO1123, and 0% by mass of R744, and the point B represents 46% by mass of R32, 37.2% by mass of HFO1123, and 16.8% by mass of R744,
a second straight line connecting the point A to a point C, where the point C represents 0% by mass of R32, 100% by mass of HFO1123, and 0% by mass of R744,
a third straight line connecting the point C to a point D, where the point D represents 0% by mass of R32, 85.7% by mass of HFOl 123, and 14.3% by mass of R744, and
a first curve connecting the point B to the point D, and
all the three components each have a mass ratio of more than 0% by mass.

ADVANTAGEOUS EFFECTS OF INVENTION

According to the present disclosure, a refrigeration cycle apparatus capable of suppressing frost formation and performance degradation, for example, while reducing the influence on global warming can be provided.

BRIEF DESCRIPTION OF DRAWINGS

Fig. 1 is a schematic configuration diagram showing a refrigeration cycle apparatus according to Embodiment 1.
Fig. 2 is a ternary composition diagram showing a range of a composition (R32/HFO1123/R744) of refrigerant according to Embodiment 1.
Fig. 3 is a ternary composition diagram showing a preferred range of the composition of refrigerant according to Embodiment 1.
Fig. 4 is a ternary composition diagram showing a more preferred range of the composition of refrigerant according to Embodiment 1.
Fig. 5 is a ternary composition diagram showing a more preferred range of the composition of refrigerant according to Embodiment 1.
Fig. 6 is a ternary composition diagram showing a more preferred range of the composition of refrigerant according to Embodiment 1.
Fig. 7 is a ternary composition diagram showing a more preferred range of the composition of refrigerant according to Embodiment 1.
Fig. 8 is a ternary composition diagram showing a range of a composition (R32/HFO1123/R744) of refrigerant according to Embodiment 2.
Fig. 9 is a ternary composition diagram showing a preferred range of the composition of refrigerant according to Embodiment 2.

Fig. 10 is a ternary composition diagram showing a more preferred range of the composition of refrigerant according to Embodiment 2.

Fig. 11 is a ternary composition diagram showing a more preferred range of the composition of refrigerant according to Embodiment 2.

Fig. 12 is a ternary composition diagram showing a more preferred range of the composition of refrigerant according to Embodiment 2.

Fig. 13 is a ternary composition diagram showing a more preferred range of the composition of refrigerant according to Embodiment 2.

Fig. 14 is a graph showing properties of refrigerant according to Embodiments 1 and 2.

Fig. 15 is a graph for illustrating properties of refrigerant according to Embodiment 3.

Fig. 16 is another graph for illustrating properties of refrigerant according to Embodiment 3.

DESCRIPTION OF EMBODIMENTS

In the following, embodiments of the present disclosure are described based on the drawings.

Embodiment 1

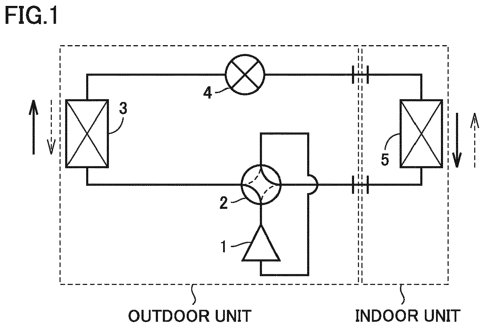

First, an overview of a refrigeration cycle apparatus in the present embodiment is described briefly. Fig. 1 is a schematic configuration diagram showing the refrigeration cycle apparatus according to Embodiment 1. The refrigeration cycle apparatus includes a refrigeration circuit, and the refrigeration circuit includes a compressor 1, a flow path switching valve (four-way valve) 2 to switch the flow direction depending on whether the apparatus works for cooling or heating, an outdoor heat exchanger 3, an expansion valve 4, and an indoor heat exchanger 5. For a refrigeration cycle apparatus that is not required to switch between cooling and heating, flow path switching valve 2 is unnecessary.

For cooling, gaseous refrigerant of high temperature and high pressure generated through compression by compressor 1 flows through flow path switching valve 2 (the flow path indicated by the solid line) into outdoor heat exchanger 3 to be condensed at outdoor heat exchanger 3. The liquid refrigerant generated through condensation at outdoor heat exchanger 3 flows through expansion valve 4 into indoor heat exchanger 5 to be evaporated (vaporized) at indoor heat exchanger 5. Finally, the gaseous refrigerant generated through evaporation at indoor heat exchanger 5 returns to compressor 1 through flow path switching valve 2 (the flow path indicated by the solid line). In this way, for cooling, refrigerant circulates in the refrigeration circuit of the refrigeration cycle apparatus in the direction indicated by solid-line arrows shown in Fig. 1.

For heating, gaseous refrigerant of high temperature and high pressure generated through compression by compressor 1 flows through flow path switching valve 2 (the flow path indicated by the dotted line) into indoor heat exchanger 5 to be condensed at indoor heat exchanger 5. The liquid refrigerant generated through condensation at indoor heat exchanger 5 flows through expansion valve 4 into outdoor heat exchanger 3 to be evaporated (vaporized) at outdoor heat exchanger 3. The refrigerant vaporized at outdoor heat exchanger 3 returns to compressor 1 through flow path switching valve 2 (the flow path indicated by the dotted line). In this way, for heating, refrigerant circulates in the refrigeration circuit of the refrigeration cycle apparatus in the direction indicated by broken-line arrows shown in Fig. 1.

The above-described elements of the configuration are minimum required elements of the refrigeration cycle apparatus capable of cooling and heating. The refrigeration cycle apparatus in the present embodiment may further include other devices such as gas-liquid separator, receiver, accumulator, high and low pressure heat exchanger.

Refrigerant

Next, refrigerant to be enclosed in the refrigeration circuit in the present embodiment is described. The refrigerant contains three components that are R32, HFO1123, and R744 falling within a predetermined composition range.

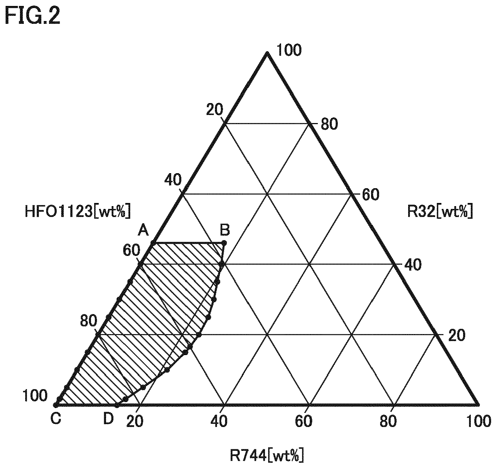

Fig. 2 is a composition diagram (ternary composition diagram) showing, by triangular coordinates, a composition ratio (mass ratio) between the three components (R32, HFO1123, and R744) contained in the refrigerant. In Fig. 2, the mass ratio between the three components falls in a range (hatched portion in Fig. 2) enclosed by a first straight line connecting a point A to a point B, a second straight line connecting the point A to a point C, a third straight line connecting the point C to a point D, and a first curve connecting the point B to the point D. The aforementioned range includes the composition ratios on the first straight line (except for the point A) and the first curve, and does not include the composition ratios on the second and third straight lines.

The point A represents 46% by mass of R32, 54% by mass of HFO1123, and 0% by mass of R744 (such a composition ratio is represented as "R32/HFO1123/R744 = 46/54/0% by mass" hereinafter).

The point B represents the composition ratio "R32/HFO1123/R744= 46/37.2/16.8% by mass."

The point C represents the composition ratio "R32/HFO1123/R744 = 0/100/0% by mass."

The point D represents the composition ratio "R32/HFO1123/R744 = 0/85.7/14.3% by mass."

In Fig. 2, the first curve connecting the point B to the point D is represented by the following formula (1) [boundary condition: $0 \leq Y \leq 39.84$, $14.3 \leq X \leq 39.8$], where the first curve connects the point B to the point D, the component R744 is represented by an X axis, and a Y axis is perpendicular to the X axis.

$$Y = 0.0000010672X^6 - 0.0001465588X^5 + 0.0082178036X^4 - 0.2396523289X^3$$

$$+ 3.8262954499X^2 - 31.0173735188X + 96.765465851 \ldots (1)$$

The first curve is a line (boundary line determining whether frost formation occurs during heating operation when the outdoor temperature is 7°C) representing the composition of the refrigerant having a temperature gradient of 7°C.

In the composition range extending leftward from the first curve connecting the point B to the point D in Fig. 2, the temperature gradient of the refrigerant is less than 7°C, and therefore, frost formation can be suppressed even during heating operation when the outdoor temperature is 7°C.

When the refrigerant composition falls within the range represented by the hatched portion (extending downward from the first straight line connecting the point A to the point B), the ratio of R32 in the refrigerant is less than 46% by mass. Therefore, the GWP of the refrigerant is less than or equal to 15% of the GWP (2090) of R410A. Thus, the refrigeration cycle apparatus in the present embodiment has a smaller influence on global warming.

For all the compositions defined by the straight lines and the curve connecting the points A, B, C, and D in the present embodiment, the refrigerant can have a critical temperature of 52°C or more, and the two-phase region of high thermal conductivity can be used on the high pressure side. It should be noted that the upper limit of the outside temperature at which the refrigeration cycle apparatus such as air conditioner can be used is usually 52°C.

Moreover, the pressure loss of the refrigerant used in the present embodiment is smaller than the pressure loss of R410A.

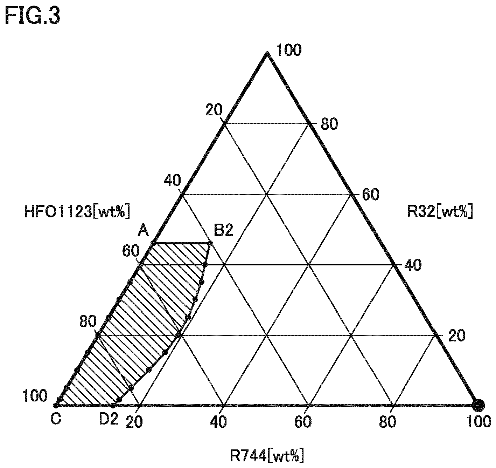

Further, in Fig. 3, the composition ratio (mass ratio) between the three components (R32, HFO1123, and R744) contained in the refrigerant preferably falls in a range (hatched portion in Fig. 3) enclosed by a first straight line connecting the point A to a point B2 (R32/HFO1123/R744 = 46/40.3/13.7% by mass), a second straight line connecting the point A to the point C, a third straight line connecting the point C to a point D2 (R32/HFO1123/R744 = 0/86.1/13.9% by mass), and a first curve connecting the point B2 to the point D2 (curve represented by the following formula (1-2) [boundary condition: $0 \leq Y \leq 39.84$, $13.86 \leq X \leq 39.8$]).

$$Y = -0.0000016567X^6 + 0.0002536428X^5 - 0.0156242136X^4 +$$

$$0.4985214814X^3 - 8.7105880053X^2 + 80.1336472203X - 306.1133650192 \ldots (1\text{-}2)$$

In this case, in the composition range extending leftward from the first curve connecting the point B2 to the point D2 in Fig. 3, the temperature gradient of the refrigerant is less than 6°C, and therefore, frost formation can be suppressed even during heating operation when the outdoor temperature is 6°C, and frost formation can thus be suppressed more reliably.

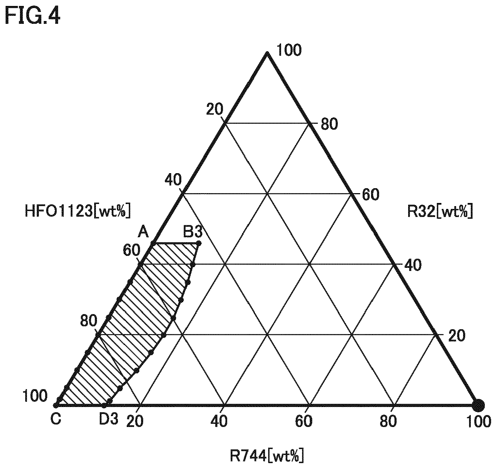

Further, in Fig. 4, the composition ratio between the three components contained in the refrigerant preferably falls in a range (hatched portion in Fig. 4) enclosed by a first straight line connecting the point A to a point B3 (R32/HFO1123/R744 = 46/43.2/10.8% by mass), a second straight line connecting the point A to the point C, a third straight line connecting the point C to a point D3 (R32/HFO1123/R744 = 0/88.7/11.3% by mass), and a first curve connecting the point B3 to the point D3 (curve represented by the following formula (1-3) [boundary condition: $0 \leq Y \leq 39.84$, $11.31 \leq X \leq 33.79$]).

$$Y = -0.0000015304X^6 + 0.0002020386X^5 - 0.0107078613X^4 +$$

$$0.2938468312X^3 - 4.4132132218X^2 + 35.5395625683X - 121.5449310970 \ldots (1\text{-}3)$$

In this case, in the composition range extending leftward from the first curve connecting the point B3 to the point D3 in Fig. 4, the temperature gradient of the refrigerant is less than 5°C, and therefore, frost formation can be suppressed even during heating operation when the outdoor temperature is 5°C, and frost formation can thus be suppressed more reliably.

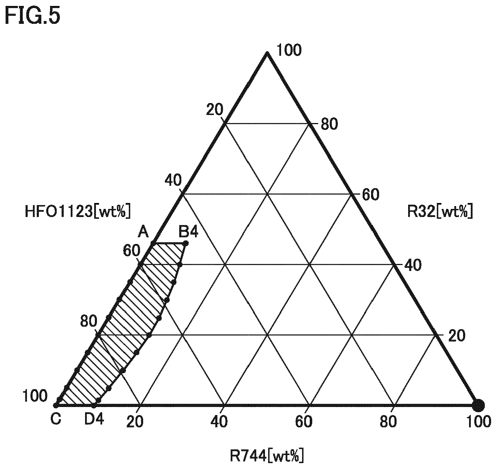

Further, in Fig. 5, the composition ratio between the three components contained in the refrigerant preferably falls in a range (hatched portion in Fig. 5) enclosed by a first straight line connecting the point A to a point B4 (R32/HFO1123/R744 = 46/46/8% by mass), a second straight line connecting the point A to the point C, a third straight line connecting the point C to a point D4 (R32/HFO1123/R744 = 0/91/9% by mass), and a first curve connecting the point B4 to the point D4 (curve represented by the following formula (1-4) [boundary condition: $0 \leq Y \leq 39.84$, $8.95 \leq X \leq 31.05$]).

$$Y = -0.0000012965X^6 + 0.0001480600X^5 - 0.0067494894X^4 +$$
$$0.1592511164X^3 - 2.0569218561X^2 + 15.0215083652X - 48.3962777129 \ldots (1\text{-}4)$$

In this case, in the composition range extending leftward from the first curve connecting the point B4 to the point D4 in Fig. 5, the temperature gradient of the refrigerant is less than 4°C, and therefore, frost formation can be suppressed even during heating operation when the outdoor temperature is 4°C, and frost formation can thus be suppressed more reliably.

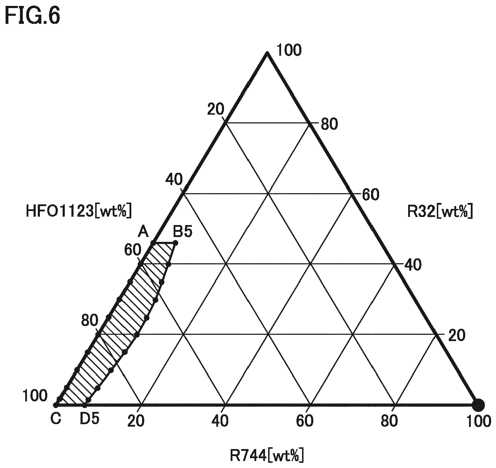

Further, in Fig. 6, the composition ratio between the three components contained in the refrigerant preferably falls in a range (hatched portion in Fig. 6) enclosed by a first straight line connecting the point A to a point B5 (R32/HFO1123/R744 = 46/48.6/5.4% by mass), a second straight line connecting the point A to the point C, a third straight line connecting the point C to a point D5 (R32/HFO1123/R744 = 0/93.3/6.7% by mass), and a first curve connecting the point B5 to the point D5 (curve represented by the following formula (1-5) [boundary condition: $0 \leq Y \leq 39.84$, $6.72 \leq X \leq 28.39$]).

$$Y = -0.0000011225X^6 + 0.0001099130X^5 - 0.0042657843X^4 +$$
$$0.0860474269X^3 - 0.9562929239X^2 + 6.8790153675X - 21.8643132039 \ldots (1\text{-}5)$$

In this case, in the composition range extending leftward from the first curve connecting the point B5 to the point D5 in Fig. 6, the temperature gradient of the refrigerant is less than 3°C, and therefore, frost formation can be suppressed even during heating operation when the outdoor temperature is 3°C, and frost formation can thus be suppressed more reliably.

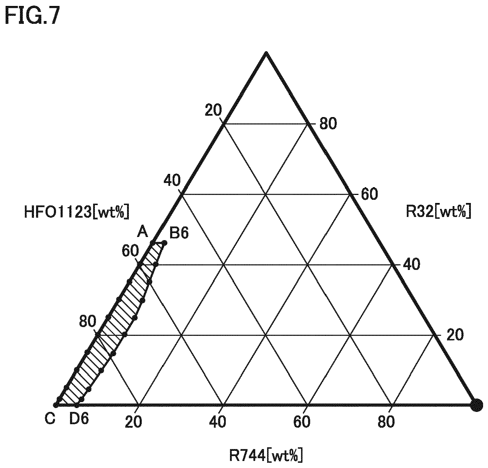

Further, in Fig. 7, the composition ratio between the three components contained in the refrigerant preferably falls in a range (hatched portion in Fig. 7) enclosed by a first straight line connecting the point A to a point B6 (R32/HFO1123/R744 = 46/51.3/2.7% by mass), a second straight line connecting the point A to the point C, a third straight line connecting the point C to a point D6 (R32/HFO1123/R744 = 0/95.5/4.5% by mass), and a first curve connecting the point B6 to the point D6 (curve represented by the following formula (1-6) [boundary condition: $0 \leq Y \leq 39.84$, $4.5 \leq X \leq 25.7$]).

$$Y = -0.0000010154X^6 + 0.0000840028X^5 - 0.0027360831X^4 +$$
$$0.0471715299X^3 - 0.4587670880X^2 + 3.7993138372X - 11.1892990965 \ (0 \leq Y \leq$$
$$39.84, 4.5 \leq X \leq 25.7) \ldots (1\text{-}6)$$

In this case, in the composition range extending leftward from the first curve connecting the point B6 to the point D6 in Fig. 7, the temperature gradient of the refrigerant is less than 2°C, and therefore, frost formation can be suppressed even during heating operation when the outdoor temperature is 2°C, and frost formation can thus be suppressed more reliably.

The refrigerant used in the present embodiment may be a ternary refrigerant mixture made up of the above-specified three components only, or may contain an additional component(s). The additional component(s) may be any of HFO1234yf, HFO1234ze, HFO1132(E), R290, R1270, R134a, R125, and the like, or other HFC based refrigerants, for example. The content of the additional component(s) in the refrigerant mixture, for example, is determined to fall within a range that does not hinder major advantageous effects of the present embodiment. HFO1132(E) has properties such as boiling point that are substantially equivalent to those of HFO1123, and therefore, the refrigerant according to the present embodiment may contain HFO1132(E) instead of HFO1123 so that the resultant ternary refrigerant mixture can be used similarly to the refrigerant according to the present embodiment.

The refrigerant may further contain refrigerator oil. The refrigerator oil may for example be a commonly-used refrigerator oil (such as ester-based lubricating oil, ether-based lubricating oil, fluorine-based lubricating oil, mineral-based lubricating oil, hydrocarbon-based lubricating oil). In this case, preferably a refrigerator oil excellent in compatibility with the refrigerant and stability for example is selected. A specific refrigerator oil may for example be polyalkylene glycol, polyolester, polyvinyl ether, alkylbenzene, mineral oil, or the like, and is not limited to them.

The refrigerant may further contain a stabilizer as required, in the case for example where high stability is required under harsh conditions in use, for example. The stabilizer is a component for improving the stability of refrigerant against heat and oxidation. The stabilizer may for example be any known stabilizer used conventionally for refrigeration cycle apparatuses, such as oxidation resistance improving agent, heat resistance improving agent, metal deactivator, or the like.

The stabilizer may for example be any of aliphatic nitro compounds such as nitromethane and nitroethane, aromatic nitro compounds such as nitrobenzene and nitrostyrene, ethers such as 1,4-dioxane, amines such as 2,2,3,3,3-pentafluoropropylamine and diphenylamine, butylhydroxyxylene, benzotriazole, and the like. A single stabilizer may be used, or a combination of two or more different stabilizers may be used.

The content of the stabilizer that varies depending on the type of the stabilizer is set to a content that does not adversely affect the nature of the refrigerant composition. The content of the stabilizer is preferably 0.01 to 5% by mass, and more preferably 0.05 to 2% by mass, with respect to the total refrigerant amount (100% by mass).

The refrigerant may further contain a polymerization inhibitor. The polymerization inhibitor may for example be any of 4-methoxy-1-naphthol, hydroquinone, hydroquinone methyl ether, dimethyl-t-butylphenol, 2,6-di-tert-butyl-p-cresol, benzotriazole, and the like.

The content of the polymerization stabilizer is preferably 0.01 to 5% by mass, and more preferably 0.05 to 2% by mass, with respect to the total refrigerant amount (100% by mass).

Refrigeration Cycle Apparatus

In the present embodiment, the refrigeration cycle apparatus is not particularly limited, but may be any of an air conditioner for commercial use or home use, an automobile air conditioner, a heat pump for vending machines, a refrigeration cabinet, a refrigerator for cooling the inside of a container or a refrigeration cabinet for marine transportation or the like, a chiller unit, a turbo refrigerator, and the like.

The refrigeration cycle apparatus in the present embodiment can also be used for a refrigeration cycle apparatus dedicated to heating, such as floor heater, snow melting apparatus, and the like. In particular, the refrigeration cycle apparatus in the present embodiment is useful as an air conditioner for commercial use or home use for which downsizing of the apparatus is required.

While the refrigeration cycle apparatus in the present embodiment is described as the one including a pair of an outdoor unit and an indoor unit that are connected to each other, the refrigeration cycle apparatus may include a single outdoor unit and a plurality of indoor units, or include a plurality of outdoor units and a plurality of indoor units.

The refrigeration cycle apparatus in the present embodiment may also be a room air conditioner, a package air conditioner, or the like capable of switching between cooling and heating, or a refrigeration cycle apparatus for low-temperature apparatuses such as refrigerator.

The refrigeration cycle apparatus in the present embodiment is preferably a refrigeration cycle apparatus for air conditioning (air conditioner).

The refrigeration cycle apparatus for air conditioning (air conditioner) may for example be any of a room air conditioner, a package air conditioner, a multi air conditioner for building, a window-type air conditioner, a mobile air conditioner, and the like.

For the refrigeration cycle apparatus for air conditioning, preferably the refrigerant flow direction with respect to the airflow direction is set so that the seasonal performance factor in consideration of the total performance factor over a certain period, such as APF (annual performance factor), is maximized. In this way, the actual performance factor (performance) of the refrigeration cycle apparatus used for air conditioning can be improved. Specifically, a description is given below of a method for setting the refrigerant flow direction with respect to the airflow direction so that the seasonal performance factor is maximized.

In the case where the refrigerant flow direction is opposite to the airflow direction (a refrigerant flow in such a direction is referred to as "counterflow" hereinafter), relatively higher performance is achieved as compared with the case where the refrigerant flow direction is the same as the airflow direction (a refrigerant flow in such a direction is referred to as "parallel flow" hereinafter). The seasonal performance factor of the refrigeration cycle apparatus can therefore be increased by setting the refrigerant flow direction with respect to the airflow direction so that the refrigerant flow through a portion used at a higher ratio in a certain period and having the largest heat exchange amount is the counterflow.

In general, in a refrigerant condensation process in which a phase change occurs between the three phases that are gas phase, gas-liquid two-phase, and liquid phase, a great temperature change is caused with the phase change, and therefore, the refrigerant flow is formed as the counterflow and, in a refrigerant evaporation process in which a phase change occurs substantially between two phases only, a small or no temperature change is caused, and therefore, a large difference is unlikely to occur in the logarithmic average temperature regardless of whether the refrigerant flow is the counterflow or parallel flow. Therefore, in the case where the ratio at which cooling is used is substantially identical to the ratio at which heating is used, a design is preferably made so that the refrigerant flow is the counterflow in the outdoor heat exchanger (condenser) and the parallel flow in the indoor heat exchanger (evaporator) during cooling.

For a refrigerant that is a refrigerant mixture containing a plurality of different refrigerants and having a temperature gradient, like the refrigerant according to the present embodiment, a temperature change occurs even in a two-phase region, and therefore, a design is preferably made so that the refrigerant flow is the counterflow also in the evaporator.

Moreover, in an air conditioner which used chiefly for cooling (such as multi air conditioner for building) and in which the refrigerant is a zeotropic refrigerant mixture, the outdoor heat exchanger (evaporator) has the largest heat exchange amount. In order to maximize the seasonal performance factor, it is therefore preferable to design the air conditioner so that the refrigerant flow through the outdoor heat exchanger (evaporator) is the counterflow and the refrigerant flow through the indoor heat exchanger (condenser) is the counterflow during cooling, while the refrigerant flow through the outdoor heat exchanger is the parallel flow and the refrigerant flow through the indoor heat exchanger is the parallel flow during heating.

Moreover, in an air conditioner which is used chiefly for heating (such as room air conditioner, package air conditioner) and in which the refrigerant is a zeotropic refrigerant mixture, the heat exchange amount is largest in the indoor heat exchanger (during condensation). In order to maximize the seasonal performance factor, it is therefore preferable to design the air conditioner so that the refrigerant flow through the outdoor heat exchanger (during evaporation) is the counterflow and the refrigerant flow through the indoor heat exchanger (during condensation) is the counterflow during heating, while the refrigerant flow through the outdoor heat exchanger is the parallel flow and the refrigerant flow through the indoor heat exchanger is the parallel flow during cooling.

Moreover, in a reversible air conditioner capable of reversible cooling and heating (such as room air conditioner), the annual energy consumption for heating is generally considered as being higher than that for cooling. Because of this, the APF is set to a larger value for heating requiring a larger annual energy consumption. Thus, when the energy consumption for heating is larger than that for cooling, preferably the air conditioner is designed so that the refrigerant flow through the outdoor heat exchanger (during evaporation) is the parallel flow and the refrigerant flow through the indoor heat exchanger (during condensation) is the counterflow, in order to maximize the seasonal performance factor, like the air conditioner used chiefly for heating.

The above-described design is a design for a reversible air conditioner capable of reversible cooling and heating, as shown in Fig. 1. The Lorenz cycle and/or a hexagonal valve, for example, may further be combined so that the refrigerant flow is the counterflow in either one of the outdoor heat exchanger and the indoor heat exchanger during both cooling and heating (cycle in which the refrigerant flow is the counterflow in one of the indoor and outdoor door heat exchangers). In this case, the refrigeration cycle apparatus in which a zeotropic refrigerant mixture is used provides a high-energy-efficiency design.

Alternatively, the indoor heat exchanger and the outdoor heat exchanger may each be provided with the Lorenz cycle or combined with a multi-way valve having six or more ways, so that the refrigerant flow is the counterflow in both the outdoor heat exchanger and the indoor heat exchanger during both cooling and heating (cycle in which the refrigerant flow is the counterflow in both the indoor and outdoor heat exchangers). In this case, the refrigeration cycle apparatus in which a zeotropic refrigerant mixture is used provides a highest-energy-efficiency design.

A design may be made to combine a check valve, a three-way valve or the like so that the refrigerant flow during cooling/heating is always counterflow partially or entirely in either one of or both of the outdoor heat exchanger and the indoor heat exchanger, for example (partial counterflow: partial counterflow cycle, entire counterflow: complete counterflow cycle).

The indoor and outdoor heat exchangers may be divided into a plurality of heat exchangers and a combination of the resultant heat exchangers may be used, or a switch mechanism may be provided to enable switching between cooling and heating, so that the refrigerant flow rate is higher during condensation and lower during evaporation.

A high and low pressure heat exchanger and/or a bypass circuit may also be provided.

Embodiment 2

Refrigerant

A refrigeration cycle apparatus according to the present embodiment differs from that of Embodiment 1 in that the composition ratio between the three components in the refrigerant is set so that the pressure loss of the refrigerant at a saturated gas temperature standard is less than or equal to the pressure loss of R32 which is used widely for air conditioners and the like. Other basic features of Embodiment 2 are identical to those of Embodiment 1, and therefore, the description thereof is not herein repeated.

Specifically, the refrigerant used in the present embodiment has a mass ratio between the three components represented in a composition diagram by triangular coordinates, and the mass ratio between the three components falls in a range enclosed by

a first straight line connecting a point E to the point B, where the point E represents 46% by mass of R32, 53.4% by mass of HFO1123, and 0.6% by mass of R744,
a second curve connecting the point E to a point F, where the point F represents 1.65% by mass of R32, 82.8% by mass of HFO1123, and 15.55% by mass of R744, and the second curve is represented by the following formula (2) [boundary condition: $1.47 \leq Y \leq 39.84$, $16.35 \leq X \leq 23.6$], where the component R744 is represented by an X axis and a Y axis is perpendicular to the X axis, and
a first curve connecting the point B to the point F and represented by the formula (1) [boundary condition: $1.47 \leq Y \leq 39.84$, $16.35 \leq X \leq 39.8$], where the component R744 is represented by an X axis and a Y axis is perpendicular to the X axis.

$$Y = 6.2229811918E^{-08}X^{10} - 6.1417665837E^{-06}X^9 + 0.0002122018X^8 - 0.0025390680X^7 + 0.0005289805X^6 - 0.2205484505X^5 - 6.6805986428X^4 + 984.2366988008X^3 - 24963.7886980727X^2 + 258533.891864178X - 993240.057394683 \dots (2)$$

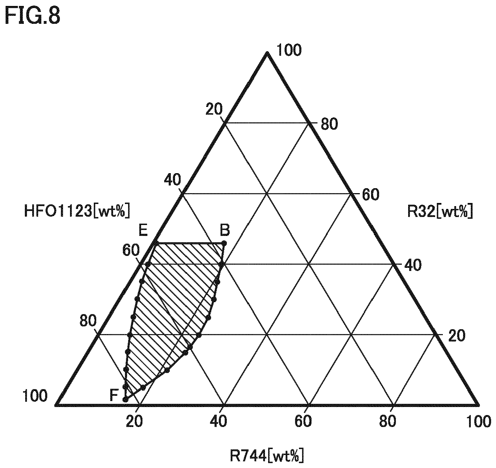

Fig. 8 is a ternary composition diagram showing a composition ratio between the three components (R32, HFO1123, and R744) in the refrigerant according to the present embodiment. In Fig. 8, the mass ratio between the three components falls in a range (hatched portion in Fig. 8) enclosed by the first straight line connecting the point E to the point B, the second curve connecting the point E to the point F, and the first curve connecting the point B to the point F. The range includes the composition ratios on the first straight line, the first curve, and the second curve.

The point E represent the composition ratio "R32/HFO1123/R744 = 46/53.4/0.6% by mass."

The point B represents the composition ratio "R32/HFO1123/R744= 46/37.2/16.8% by mass" (similar to Embodiment 1).

The point F represents the composition ratio "R32/HFO1123/R744= 1.65/82.8/15.55% by mass."

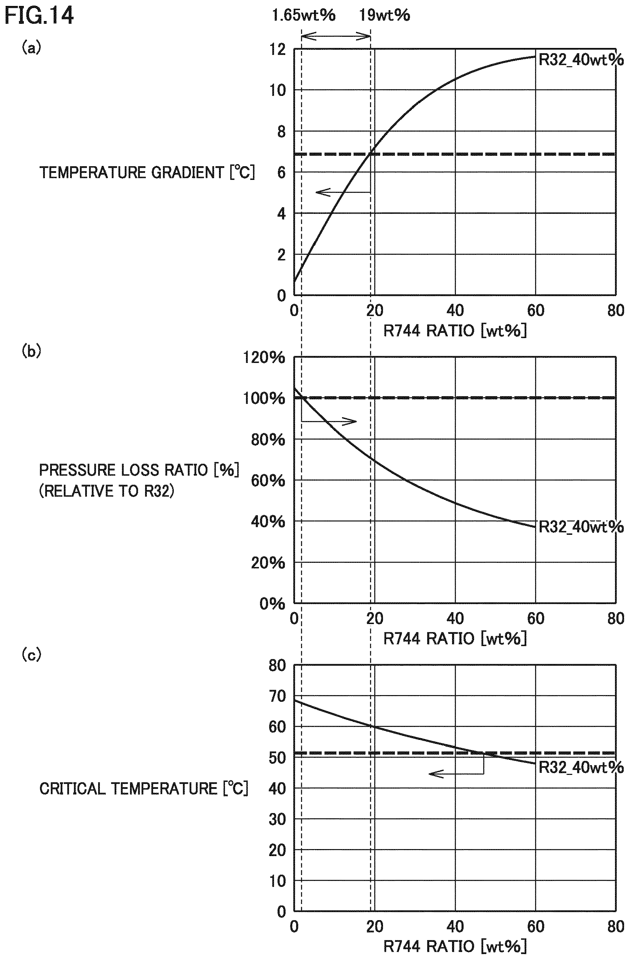

The second curve connecting the point E to the point F is represented by the above formula (2) [boundary condition: $1.47 \leq Y \leq 39.84$, $16.35 \leq X \leq 23.6$], where the component R744 is represented by an X axis and a Y axis is perpendicular to the X axis. The second curve is a curve (boundary line of the pressure loss of less than or equal to that of R32) where the pressure loss ratio is less than or equal to that of R32 as shown in Fig. 14 (b).

In the present embodiment, the refrigerant having the composition falling in the range enclosed by the second curve is used to enable the pressure loss of the refrigerant to be less than or equivalent to that of R32. Therefore, the pressure loss of the refrigerant in pipes or the like can more reliably be reduced, relative to Embodiment 1.

The first curve connecting the point B to the point F is represented by the above formula (1) [boundary condition: $1.47 \leq Y \leq 39.84$, $16.35 \leq X \leq 39.8$], where the component R744 is represented by an X axis and a Y axis is perpendicular to the X axis (similar to the formula in Embodiment 1, and different therefrom in terms of the boundary condition only).

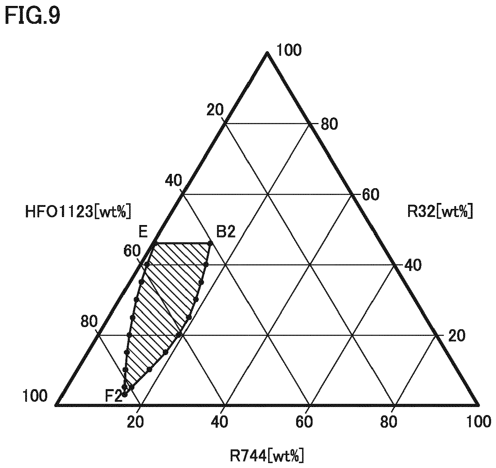

Further, in Fig. 9, the composition ratio (mass ratio) between the three components (R32, HFO1123, and R744) contained in the refrigerant preferably falls in a range (hatched portion in Fig. 9) enclosed by a first straight line connecting the point E to a point B2 (R32/HFO1123/R744 = 46/40.3/13.7% by mass), a second curve connecting the point E to a point F2 (R32/HFO1123/R744 = 3/82.1/14.9% by mass) (the curve represented by the above formula (2) [boundary condition: $2.6 \leq Y \leq 39.84$, $16.35 \leq X \leq 23.6$]), and a first curve connecting the point B2 to the point F2 (the curve represented by the following formula (1-7) [boundary condition: $2.6 \leq Y \leq 39.84$, $16.35 \leq X \leq 36.71$]).

$$Y = -0.0000035504X^6 + 0.0005589786X^5 - 0.0358319203X^4 +$$

$$1.2005487479X^3 - 22.2016290444X^2 + 216.0131860167X - 866.1843532277 \ldots (1\text{-}7)$$

In this case, in the composition range extending leftward from the first curve connecting the point B2 to the point F2 in Fig. 9, the temperature gradient of the refrigerant is less than 6°C, and therefore, frost formation can be suppressed even during heating operation when the outdoor temperature is 6°C, and frost formation can thus be suppressed more reliably.

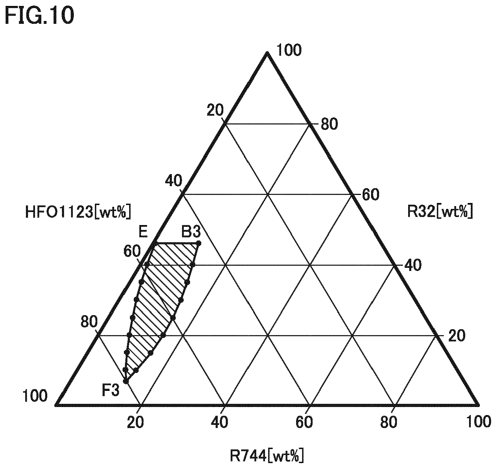

Further, in Fig. 10, the composition ratio between the three components contained in the refrigerant preferably falls in a range (hatched portion in Fig. 10) enclosed by a first straight line connecting the point E to a point B3 (R32/HFO1123/R744 = 46/43.2/10.8% by mass), a second curve connecting the point E to a point F3 (the curve represented by the above formula (2) [boundary condition: $5.88 \leq Y \leq 39.84$, $16.44 \leq X \leq 23.6$]), and a first curve connecting the point B3 to the point F3 (R32/HFO1123/R744 = 6.8/80.2/13% by mass) (the curve represented by the following formula (1-8) [boundary condition: $5.88 \leq Y \leq 39.84$, $16.44 \leq X \leq 33.79$]).

$$Y = -0.0000063811X^6 + 0.0009332843X^5 - 0.0560517185X^4 +$$

$$1.7733026830X^3 - 31.1858892719X^2 + 290.1995034461X - 1115.9372084806 \ldots (1\text{-}8)$$

In this case, in the composition range extending leftward from the first curve connecting the point B3 to the point F3 in Fig. 10, the temperature gradient of the refrigerant is less than 5°C, and therefore, frost formation can be suppressed even during heating operation when the outdoor temperature is 5°C, and frost formation can thus be suppressed more reliably.

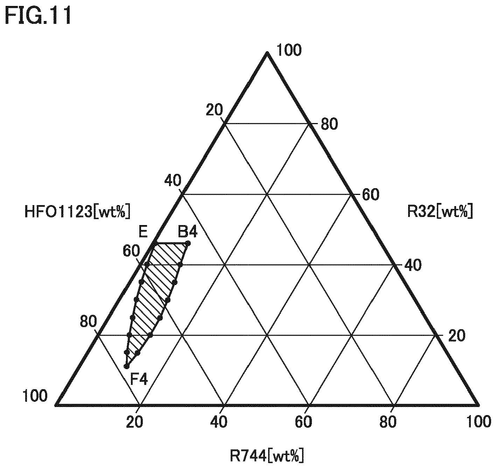

Further, in Fig. 11, the composition ratio between the three components contained in the refrigerant preferably falls in a range (hatched portion in Fig. 11) enclosed by a first straight line connecting the point E to a point B4 (R32/HFO1123/R744 = 46/46/8% by mass), a second curve connecting the point E to a point F4 (R32/HFO1123/R744 = 11.15/77.77/11.08% by mass) (the curve represented by the above formula (2) [boundary condition: $9.66 \leq Y \leq 39.84$, $16.65 \leq X \leq 23.60$]), and a first curve connecting the point B4 to the point F4 (the curve represented by the following formula (1-9) [boundary condition: $9.66 \leq Y \leq 39.84$, $16.65 \leq X \leq 31.05$]).

$$Y = -0.0000063892X^6 + 0.0008593393X^5 - 0.0476999288X^4 +$$

$$1.4030033773X^3 - 23.0733208088X^2 + 202.3626203801X - 736.7881385396 \ldots (1\text{-}9)$$

In this case, in the composition range extending leftward from the first curve connecting the point B4 to the point F4 in Fig. 11, the temperature gradient of the refrigerant is less than 4°C, and therefore, frost formation can be suppressed even during heating operation when the outdoor temperature is 4°C, and frost formation can thus be suppressed more reliably.

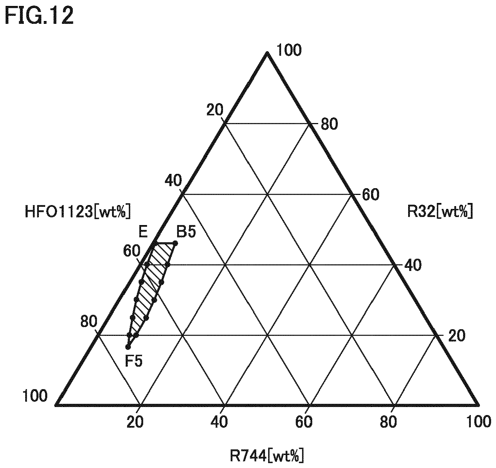

Further, in Fig. 12, the composition ratio between the three components contained in the refrigerant preferably falls in a range (hatched portion in Fig. 12) enclosed by a first straight line connecting the point E to a point B5 (R32/HFO1123/R744 = 46/48.6/5.4% by mass), a second curve connecting the point E to a point F5 (R32/HFO1123/R744 = 16.46/74.69/8.86% by mass) (the curve represented by the above formula (2) [boundary condition: $14.25 \leq Y \leq 39.84$, $17.09 \leq X \leq 23.6$]), and a first curve connecting the point B5 to the point F5 (the curve represented by the following formula (1-10) [boundary condition: $14.25 \leq Y \leq 39.84$, $17.09 \leq X \leq 28.39$]).

$$Y = -0.0000010569X^6 + 0.0000655262X^5 + 0.0001778327X^4 -$$

$$0.1023748302X^3 + 3.0702677272X^2 - 36.0180180702X + 159.7170512757 \ldots (1\text{-}10)$$

In this case, in the composition range extending leftward from the first curve connecting the point B5 to the point F5 in Fig. 12, the temperature gradient of the refrigerant is less than 3°C, and therefore, frost formation can be suppressed even during heating operation when the outdoor temperature is 3°C, and frost formation can thus be suppressed more reliably.

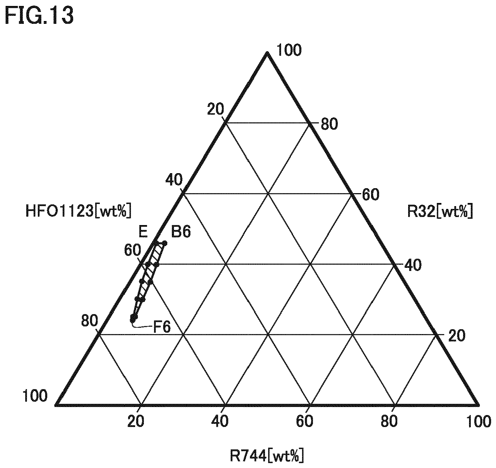

Further, in Fig. 13, the composition ratio between the three components contained in the refrigerant preferably falls in a range (hatched portion in Fig. 13) enclosed by a first straight line connecting the point E to a point B6 (R32/HFO1123/R744 = 46/51.3/2.7% by mass), a second curve connecting the point E to a point F6 (R32/HFO1123/R744 = 24/69.9/6.1% by mass) (the curve represented by the above formula (2) [boundary condition: $20.78 \leq Y \leq 39.84$, $18.07 \leq X \leq 23.60$]), and a first curve connecting the point B6 to the point F6 (the curve represented by the following formula (1-11) [boundary condition: $20.78 \leq Y \leq 39.84$, $18.07 \leq X \leq 25.72$]).

$$Y = -0.0000524007X^5 + 0.0047461037X^4 - 0.1677724456X^3 +$$
$$2.9582326141X^2 - 24.7570597636X + 87.0409148360 \dots (1\text{-}11)$$

In this case, in the composition range extending leftward from the first curve connecting the point B6 to the point F6 in Fig. 13, the temperature gradient of the refrigerant is less than 2°C, and therefore, frost formation can be suppressed even during heating operation when the outdoor temperature is 2°C, and frost formation can thus be suppressed more reliably.

Fig. 14 shows properties of the refrigerant according to Embodiments 1 and 2, when R32 is 40% by mass and the R744 ratio is varied in the refrigerant mixture.

The pressure loss ratio is less than or equal to 100% relative to R410A, even when the R744 ratio in Embodiment 1 is 0% by mass.

Fig. 14 (a) is a graph showing the value of the temperature gradient when the R744 ratio in the mixture is varied. For an R744 ratio of less than or equal to 19% by mass (wt%), the temperature gradient is less than or equal to 7°C.

Fig. 14 (b) is a graph showing the value of the pressure loss ratio relative to R32 when the R744 ratio in the mixture is varied. For an R744 ratio of more than or equal to 1.65% by mass, the pressure loss ratio is less than or equal to 100%.

Fig. 14 (c) is a graph showing the value of the critical temperature when the R744 ratio in the mixture is varied. For an R744 ratio of less than or equal to 44.6% by mass, the critical temperature is more than or equal to 52°C.

It is considered, from the range of the R744 ratio shown in Fig. 14 (a) to (c), the refrigerant mixture having a temperature gradient of less than or equal to 7°C, a pressure loss less than that of R32, a critical temperature of more than or equal to 52°C, and an R32 ratio of 40% by mass is required to have an R744 ratio of 1.65 to 19% by mass. Likewise, the R32 ratio can be varied to determine the range of the R744 ratio, to determine the composition range of the refrigerant mixture satisfying each desired condition. The result of this is the composition range of the refrigerant indicated by the above-described ternary composition diagram.

Embodiment 3

Refrigerant

A refrigeration cycle apparatus according to the present embodiment differs from that of Embodiment 1 in that the refrigerant further contains CF3I (trifluoroiodomethane). Other basic features of Embodiment 3 are identical to those of Embodiment 1, and therefore, the description thereof is not herein repeated.

Specifically, refrigerant used in the present embodiment contains four components that are R32, HFO1123, CF3I, and R744, and

with respect to the total amount of the refrigerant, the ratio of the sum of R32 and R744 is 8 to 20% by mass, the ratio of HFO1123 is 50 to 70% by mass, and the ratio of CF3I is 10 to 30% by mass.

With the purpose of reducing the GWP, a refrigerant mixture of R32, HFO1123, and CF3I has been proposed.

HFO1123 may undergo a disproportionation reaction and thus has a problem with the stability. In view of this, in order to suppress the disproportionation reaction of HFO1123, CF3I and R32 are mixed with HFO1123 to thereby suppress disproportionation.

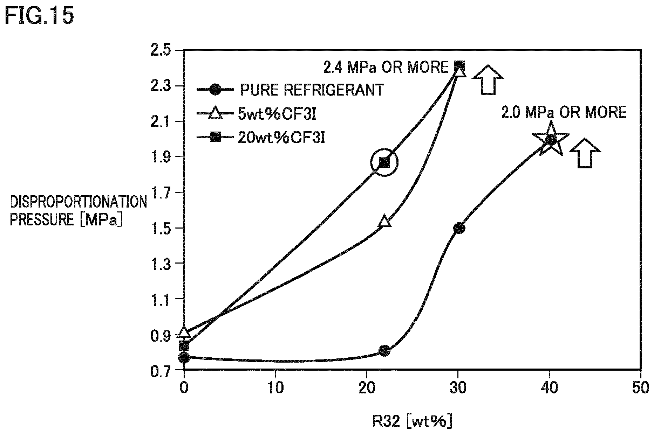

Fig. 15 shows the disproportionation pressure during a disproportionation reaction when the composition of a refrigerant mixture of HFO1123, R32, and CF3I is varied. The point enclosed by the star-shaped line in Fig. 15 is the composition that does not cause the disproportionation reaction in an air conditioner. It is considered that the disproportionation reaction will not occur at a disproportionation pressure higher than or equal to the point enclosed by the star-shaped line in Fig. 15.

Therefore, for the ternary refrigerant mixture of R32, HFO1123, and CF3I, there should be the following two methods for reducing R32 with the purpose of lowering the GWP.

The first method increases the ratio of HFO1123. In this case, the disproportionation pressure is lowered, resulting in occurrence of the disproportionation reaction.

The second method increases the ratio of CF3I. Up to the composition ratio at the point enclosed by the circular line in Fig. 15, the disproportionation pressure of the refrigerant can be made less than or equivalent to the disproportionation pressure at the point enclosed by the star-shaped line in Fig. 15. The composition at the point enclosed by the circular line in Fig. 15, however, is R32/HFO1123/CF3I = 20[%]/60[%]/20[%], which results in GWP = 137, and therefore, the GWP cannot be made less than or equal to 137. In other words, the ternary refrigerant mixture of R32, HFO1123, and CF3I has a problem that the GWP cannot be lowered to be less than or equal to 137. In order to solve such problems, it is required to use a mixture of four or more different refrigerants.

The inventors therefore fixed the following contents in the composition as indicated below to study the composition ratio.

$$\text{HFO } 1123 = 60.0 \ [\%]$$

$$\text{CF3I} = 20 \ [\%]$$

Because the disproportionation reaction could occur by decrease of R32 and increase of CF3I, increase of CF3I was not studied.

Basically, it was studied to mix, with the refrigerant, R744 (and R1234yf) by an amount corresponding to a decrease of R32.

The composition ratio was adjusted based on the following rules (1) and (2). The rule (1) was given for avoiding frost formation at the heating rating (7°C DB/6°C WB), and the rule (2) was given for preventing the disproportionation reaction. DB represents dry-bulb temperature and WB represents wet-bulb temperature.

(1) temperature gradient < 7 [K] (see the horizontal row "temperature gradient" in Table 2, for example)

(2) ["specific heat of saturated gas × saturated gas density" on the low pressure side] > ["specific heat of saturated gas × saturated gas density" for R32/HFO1123/CF3I = 20%/60%/20%] (see the horizontal row "$\rho \times cp$" in Table 2, for example)

The properties of a single refrigerant that may be a component of a refrigerant mixture are shown in Table 1. The properties shown in Table 1 are physical properties of the single refrigerant for suction saturation temperature = 10°C and suction SH (suction temperature - suction saturation temperature) = 1 K.

[Table 1]

| refrigerant | [-] | R32 | R290 | R1234yf | R1123 | CF3I | $CO_2$ |
|---|---|---|---|---|---|---|---|
| suction | | | | | | | |
|   pressure | [MPaA] | 1. 107 | 0. 637 | 0. 438 | 1.439 | 0.316 | 4. 502 |
|   density | [kg/m³] | 30. 0 | 13.7 | 24. 1 | 65.3 | 28. 7 | 132. 7 |
| | [%] | 100. 00% | 45. 68% | 80.43% | 217.63% | 95. 67% | 442. 30% |
| specific heat at constant pressure | [kJ/kgK] | 1.346 | 1.835 | 0. 971 | 1. 167 | 0. 376 | 2. 411 |
| | [%] | 100. 00% | 136. 32% | 72.17% | 86. 72% | 27. 93% | 179. 10% |
| density × specific heat | [kJ m³/K] | 100. 00% | 62.27% | 58. 04% | 188. 73% | 26. 72% | 792. 17% |

The effect of suppressing the disproportionation reaction of HFO1123 by R32 is derived from "heat dilution." Specifically, it is considered that a refrigerant having a large specific heat can be mixed to suppress the disproportionation reaction through the heat dilution effect. Among the following refrigerants, it is only R744 ($CO_2$) that has a larger specific heat than R32. Therefore, R32 can be decreased while R744 ($CO_2$) can be mixed with the refrigerant to suppress the disproportionation reaction of HFO1123 and provide the refrigerant mixture that can have a lower GWP.

According to the present embodiment, the disproportionation reaction can be suppressed to a greater extent and the GWP can be lowered relative to the ternary refrigerant mixture of R32, CF3I, and HFO1123. Because R744 is mixed with the refrigerant, the pressure loss can be suppressed to a greater extent, relative to the above-described ternary refrigerant mixture.

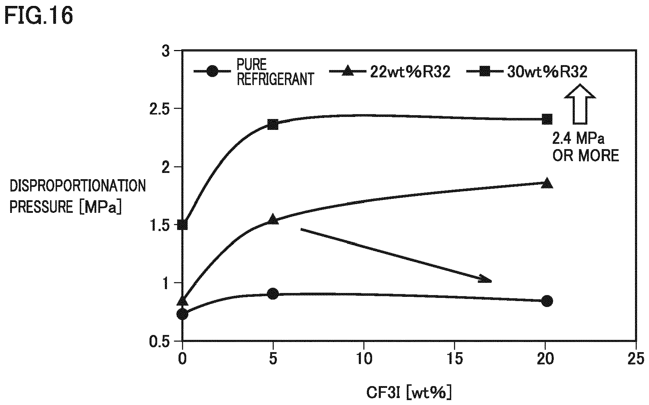

Referring to Fig. 16, if the R32 ratio is decreased in the ternary refrigerant mixture R32/HFO1123/CF3I in order to lower the GWP, the HFO1123 or CF3I ratio has to be increased. If the HFO1123 ratio is increased, however, the disproportionation pressure is lowered. If the CF3I ratio is increased, the R32 ratio is lowered and accordingly the disproportionation pressure is lowered (the graph in Fig 16 is shifted in the lower right direction). Thus, without a refrigerant such as R32 capable of providing heat dilution, reduction of the disproportionation pressure and a GWP of less than or equal to 137 cannot be achieved.

Table 2 shows specific examples of the refrigerant in the present embodiment, together with their properties. In the table, "total GWP" is the weighted average determined from the GWP value of each refrigerant shown in Table 3. In the table, "OK" means that the associated refrigerant is encompassed by the refrigerant according to the present embodiment, and "NG" means that the associated refrigerant is not encompassed by the refrigerant according to the present embodiment.

[Table 2]

| | | | R32 base | | quaternary refrigerant mixture | | | |
|---|---|---|---|---|---|---|---|---|
| | R32 | 10 | 100 | 20 | 15 | 10 | 8 | 7 |
| | R1123 | 60 | - | 60 | 60 | 60 | 60 | 60 |
| | R13I1 | 20 | - | 20 | 20 | 20 | 20 | 20 |
| composition ratio (mass%) | $CO_2$ | 3.95 | - | - | 5 | 10 | 12 | 13 |
| | R1234yf | 6.05 | - | - | - | - | - | - |
| | total | 100.0 | 100 | 100 | 100 | 100 | 100 | 100 |
| GWP | | 70 | 675 | 137 | 104 | 70 | 57 | 50 |
| assumed low pressure | MPaA | 1.0335 | 0.8131 | 1.0184 | 1.119 | 1.2222 | 1.2643 | 1.2854 |
| saturated liquid temperature | °C | -2.7 | 0.0 | -0.7 | -1.9 | -3.0 | -3.4 | -3.6 |
| saturated gas temperature | °C | 2.7 | 0.0 | 0.7 | 1.9 | 3.0 | 3.4 | 3.6 |
| midpoint temperature | °C | 0.0 | 0.0 | 0.0 | 0.0 | 0.0 | 0.0 | 0.0 |
| temperature gradient | K | 5.5 | 0.0 | 1.4 | 3.8 | 6.0 | 6.9 | 7.3 |
| gas density | kg/m³ | 47.1 | 22.1 | 45.3 | 49.0 | 52.8 | 54.3 | 55.0 |
| gas specific heat | | 0.95 | 1.25 | 0.99 | 0.99 | 0.99 | 0.99 | 0.99 |
| | | -3.84% | 26.41% | 0.00% | 0.08% | 0.13% | 0.14% | 0.15% |
| $\rho \times cp$ | | 44.8 | 27.6 | 44.8 | 48.6 | 52.3 | 53.8 | 54.5 |
| | | 0.1% | -38% | 0% | 8% | 17% | 20% | 21.7% |
| | | OK | NG | NG | OK | OK | OK | NG |

[Table 3]

| | GWP |
|---|---|
| R32 | 675 |
| R1123 | 4 |
| R13I1 | 0.4 |
| $CO_2$ | 1 |
| R1234yf | 4 |

The refrigerant used in the present embodiment may be a quaternary refrigerant mixture made up of the above-specified four components only, or may contain an additional component(s). The additional component(s) may be any of HFO1234yf, HFO1234ze, HFO1132(E), R290, R1270, R134a, R125, and the like, or other HFC based refrigerants, for example. The content of the additional component(s) in the refrigerant mixture, for example, is determined to fall within a range that does not hinder major advantageous effects of the present embodiment. HFO1132(E) has properties such as boiling point that are substantially equivalent to those of HFO1123, and therefore, the refrigerant according to the present embodiment may contain HFO1132(E) instead of HFO1123 so that the resultant ternary refrigerant mixture can be used similarly to the refrigerant according to the present embodiment.

Embodiment 4

A refrigeration cycle apparatus according to the present embodiment differs from that of Embodiment 3 in that the refrigerant further contains R1234yf. Specifically, the refrigerant used in the present embodiment contains five components that are R32, HFO1123, CF3I, R744, and R1234yf. Other basic features of Embodiment 4 are identical to those of Embodiment 3, and therefore, the description thereof is not herein repeated.

Preferably, with respect to the total amount of the refrigerant, the ratio of the sum of R32, R744, and R1234yf is 8 to 20% by mass, the ratio of HFO1123 is 50 to 70% by mass, and the ratio of CF3I is 10 to 30% by mass, and R744/R1234yf > 0.65 is met.

The refrigerant in Embodiment 3 may reach a higher pressure than the ternary refrigerant mixture of R32, HFO1123, and CF3I, and therefore, it can be necessary to increase the wall thickness of pipes, for example. In the present embodiment, R1234yf is used to lower the refrigerant pressure and thereby lower the operating pressure, and therefore, it is unnecessary to increase the wall thickness of pipes.

Table 4 and Table 5 show specific examples of the refrigerant in the present embodiment, together with their properties. In the tables, "GWP" is the weighted average determined from the GWP value of each refrigerant shown in Table 3. In the tables, "OK" means that the associated refrigerant is encompassed by the refrigerant according to the present embodiment, and "NG" means that the associated refrigerant is not encompassed by the refrigerant according to the present embodiment.

[Table 4]

| | | R32 15[%] studied | | | | R32 10[%] studied | | | |
|---|---|---|---|---|---|---|---|---|---|
| composition ratio (mass%) | R32 | 15 | 15 | 15 | 15 | 10 | 10 | 10 | 10 |
| | R1123 | 60 | 60 | 60 | 60 | 60 | 60 | 60 | 60 |
| | R13I1 | 20 | 20 | 20 | 20 | 20 | 20 | 20 | 20 |
| | $CO_2$ | 5 | 3 | 2 | 1.5 | 5 | 7.5 | 3.95 | 3 |
| | R1234yf | 0 | 2 | 3 | 3.5 | 5 | 2.5 | 6.05 | 7 |
| | total | 100 | 100 | 100 | 100 | 100 | 100 | 100 | 100.0 |
| GWP | | 104 | 104 | 104 | 104 | 70 | 70 | 70 | 70 |
| assumed low pressure | MPaA | 1.119 | 1.0585 | 1.0288 | 1.0141 | 1.0653 | 1.1426 | 1.0335 | 1.005 |
| saturated liquid temperature | °C | -1.9 | -1.8 | -1.7 | -1.6 | -2.8 | -3.0 | -2.7 | -2.6 |
| saturated gas temperature | °C | 1.9 | 1.8 | 1.7 | 1.6 | 2.8 | 3.0 | 2.7 | 2.6 |
| midpoint temperature | °C | 0.0 | 0.0 | 0.0 | 0.0 | 0.0 | 0.0 | 0.0 | 0.0 |
| temperature gradient | K | 3.8 | 3.5 | 3.4 | 3.3 | 5.6 | 5.9 | 5.5 | 5.3 |
| gas density | kg/m³ | 49.0 | 47.2 | 46.3 | 45.9 | 48.1 | 50.4 | 47.1 | 46.2 |
| gas specific heat | | 0.99 | 0.98 | 0.97 | 0.97 | 0.96 | 0.97 | 0.95 | 0.95 |
| | | 0.08% | -1.26% | -1.91% | -2.23% | -3.19% | -1.59% | -3.84% | -4.41% |
| $\rho \times$ cp | | 48.6 | 46.1 | 45.0 | 44.4 | 46.1 | 49.1 | 44.8 | 43.8 |
| | | 8.4% | 3.0% | 0.4% | -0.9% | 3% | 10% | 0.1% | -2.3% |
| | | OK | OK | OK | NG | OK | OK | OK | NG |

[Table 5]

| composition ratio (mass%) | | R32 8[%] studied | | | | | | |
|---|---|---|---|---|---|---|---|---|
| | R32 | 8 | 8 | 8 | 8 | 8 | 8 | 8 |
| | R1123 | 60 | 60 | 60 | 60 | 60 | 60 | 60 |
| | R13I1 | 20 | 20 | 20 | 20 | 20 | 20 | 20 |
| | $CO_2$ | 12 | 10 | 8 | 6 | 5 | 4.8 | 4 |
| | R1234yf | 0 | 2 | 4 | 6 | 7 | 7.2 | 8 |
| | total | 100 | 100 | 100 | 100 | 100 | 100 | 100 |
| GWP | | 57 | 57 | 57 | 57 | 57 | 57 | 57 |
| assumed low pressure | MPaA | 1.2643 | 1.199 | 1.1353 | 1.073 | 1.0424 | 1.0363 | 1.0121 |
| saturated liquid temperature | °C | -3.4 | -3.4 | -3.4 | -3.3 | -3.2 | -3.2 | -3.1 |
| saturated gas temperature | °C | 3.4 | 3.4 | 3.4 | 3.3 | 3.2 | 3.2 | 3.1 |
| midpoint temperature | °C | 0.0 | 0.0 | 0.0 | 0.0 | 0.0 | 0.0 | 0.0 |
| temperature gradient | K | 6.9 | 6.9 | 6.8 | 6.6 | 6.4 | 6.4 | 6.2 |
| gas density | kg/m$^3$ | 54.3 | 52.3 | 50.4 | 48.6 | 47.6 | 47.4 | 46.7 |
| gas specific heat | | 0.99 | 0.98 | 0.96 | 0.95 | 0.95 | 0.94 | 0.94 |
| | | 0.14% | -1.26% | -2.57% | -3.82% | -4.43% | -4.54% | -5.01% |
| $\rho \times$ cp | | 53.8 | 51.1 | 48.6 | 46.2 | 45.0 | 44.8 | 43.9 |
| | | 20.0% | 14.1% | 8.5% | 3.2% | 0.5% | 0.0% | -2.0% |
| | | OK | OK | OK | OK | OK | OK | NG |

REFERENCE SIGNS LIST

1 compressor; 2 flow path switching valve; 3 outdoor heat exchanger; 4 expansion valve; 5 indoor heat exchanger

**Claims**

**1.** A refrigeration cycle apparatus comprising a refrigeration circuit, the refrigeration circuit comprising a compressor, an outdoor heat exchanger, an indoor heat exchanger, and an expansion valve, wherein

refrigerant is enclosed in the refrigeration circuit,
the refrigerant contains three components that are R32, HFO1123, and R744,
in a composition diagram in which a mass ratio between the three components is represented by triangular coordinates, the mass ratio between the three components falls in a range enclosed by

a first straight line connecting a point A to a point B, wherein the point A represents 46% by mass of R32, 54% by mass of HFO1123, and 0% by mass of R744, and the point B represents 46% by mass of R32, 37.2% by mass of HFO1123, and 16.8% by mass of R744,
a second straight line connecting the point A to a point C, wherein the point C represents 0% by mass of R32, 100% by mass of HFO1123, and 0% by mass of R744,
a third straight line connecting the point C to a point D, wherein the point D represents 0% by mass of R32, 85.7% by mass of HFO1123, and 14.3% by mass of R744, and
a first curve connecting the point B to the point D, and

all the three components each have a mass ratio of more than 0% by mass.

**2.** The refrigeration cycle apparatus according to claim 1, wherein the first curve is represented by a formula (1):

$$Y = 0.0000010672X^6 - 0.0001465588X^5 + 0.0082178036X^4 - 0.2396523289X^3$$

$$+ 3.8262954499X^2 - 31.0173735188X + 96.765465851 \dots (1)$$

where the component R744 is represented by an X axis, a Y axis is perpendicular to the X axis, and a boundary condition is $0 \leq Y \leq 39.84$, $14.3 \leq X \leq 39.8$.

3. The refrigeration cycle apparatus according to claim 2, wherein

   in a composition diagram in which a mass ratio between the three components is represented by triangular coordinates, the mass ratio between the three components falls in a range enclosed by

   a first straight line connecting a point E to the point B, wherein the point E represents 46% by mass of R32, 53.4% by mass of HFO1123, and 0.6% by mass of R744,
   a second curve connecting the point E to a point F, wherein the point F represents 1.65% by mass of R32, 82.8% by mass of HFO1123, and 15.55% by mass of R744, and the second curve is represented by a formula (2):

$$Y = 6.2229811918E^{-08}X^{10} - 6.1417665837E^{-06}X^9 + 0.0002122018X^8 -$$

$$0.0025390680X^7 + 0.0005289805X^6 - 0.2205484505X^5 - 6.6805986428X^4 +$$

$$984.2366988008X^3 - 24963.7886980727X^2 + 258533.891864178X -$$

$$993240.057394683 \dots (2)$$

   where the component R744 is represented by an X axis, a Y axis is perpendicular to the X axis, and a boundary condition is $1.47 \leq Y \leq 39.84$, $16.35 \leq X \leq 39.8$, and
   a first curve connecting the point B to the point F, wherein the first curve is represented by the formula (1) where the component R744 is represented by an X axis, a Y axis is perpendicular to the X axis, and a boundary condition is $1.47 \leq Y \leq 39.84$, $16.35 \leq X \leq 39.8$.

4. The refrigeration cycle apparatus according to any one of claims 1 to 3, wherein the refrigeration cycle apparatus is used for air conditioning.

5. The refrigeration cycle apparatus according to claim 4, wherein in either one of the outdoor heat exchanger and the indoor heat exchanger, flow of the refrigerant is counterflow with respect to airflow, regardless of whether each of the outdoor heat exchanger and the indoor heat exchanger is a condenser or an evaporator.

6. The refrigeration cycle apparatus according to claim 4, wherein in both of the outdoor heat exchanger and the indoor heat exchanger, flow of the refrigerant is counterflow with respect to airflow, regardless of whether each of the outdoor heat exchanger and the indoor heat exchanger is a condenser or an evaporator.

7. The refrigeration cycle apparatus according to claim 4, wherein in either one of or both of the outdoor heat exchanger and the indoor heat exchanger, flow of the refrigerant is counterflow with respect to airflow, regardless of whether each of the outdoor heat exchanger and the indoor heat exchanger is partially a condenser or an evaporator.

8. The refrigeration cycle apparatus according to any one of claims 1 to 7, wherein the refrigerant enclosed in the refrigeration cycle apparatus is the refrigerant in which HFO1123 is replaced with HFO1132(E).

9. A refrigeration cycle apparatus comprising a refrigeration circuit, the refrigeration circuit comprising a compressor, an outdoor heat exchanger, an indoor heat exchanger, and an expansion valve, wherein

   refrigerant is enclosed in the refrigeration circuit,

the refrigerant contains four components that are R32, HFO1123, CF3I, and R744, and
with respect to a total amount of the refrigerant, a ratio of a sum of R32 and R744 is 8 to 20% by mass, a ratio of HFO1123 is 50 to 70% by mass, and a ratio of CF3I is 10 to 30% by mass.

10. The refrigeration cycle apparatus according to claim 9, wherein

the refrigerant further contains R1234yf,
a ratio of a sum of R32, R744, and R1234yf is 8 to 20% by mass, and R744/R1234yf > 0.65 is met.

11. The refrigeration cycle apparatus according to claim 9 or 10, wherein the refrigerant enclosed in the refrigeration cycle apparatus is the refrigerant in which HFO1123 is replaced with HFO1132(E).

FIG.1

OUTDOOR UNIT          INDOOR UNIT

FIG.2

HFO1123[wt%]

R32[wt%]

R744[wt%]

FIG.3

FIG.4

FIG.5

FIG.6

FIG.7

FIG.8

# FIG.9

FIG.10

HFO1123[wt%]

R32[wt%]

R744[wt%]

FIG.11

HFO1123[wt%]

R32[wt%]

R744[wt%]

FIG.12

FIG.13

FIG.14

(a)

TEMPERATURE GRADIENT [°C]

(b)

PRESSURE LOSS RATIO [%]
(RELATIVE TO R32)

(c)

CRITICAL TEMPERATURE [°C]

FIG.15

FIG.16

## INTERNATIONAL SEARCH REPORT

International application No.

PCT/JP2020/015260

A. CLASSIFICATION OF SUBJECT MATTER
Int. Cl. F25B1/00(2006.01)i
FI: F25B1/00 396U

According to International Patent Classification (IPC) or to both national classification and IPC

B. FIELDS SEARCHED

Minimum documentation searched (classification system followed by classification symbols)
Int. Cl. F25B1/00

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2015/125884 A1 (ASAHI GLASS CO., LTD.) 27 August 2015, paragraphs [0023]-[0065] | 1-8 |
| Y | WO 2015/115252 A1 (ASAHI GLASS CO., LTD.) 06 August 2015, paragraphs [0061]-[0088] | 1-8 |
| Y | JP 2018-40517 A (HITACHI JOHNSON CONTROLS AIR CONDITIONING INC.) 15 March 2018, paragraphs [0035], [0036] | 1-8 |
| Y | JP 2001-50685 A (SANYO ELECTRIC CO., LTD.) 23 February 2001, paragraph [0005] | 1-8 |
| Y | JP 2019-512031 A (THE CHEMOURS COMPANY FC, LLC) 09 May 2019, paragraphs [0044], [0147] | 1-8 |

☒ Further documents are listed in the continuation of Box C.        ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>22.05.2020 | Date of mailing of the international search report<br>02.06.2020 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2020/015260

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2005-15633 A (MATSUSHITA ELECTRIC INDUSTRIAL CO., LTD.) 20 January 2005, paragraph [0022] | 1-8 |
| P, Y | JP 2019-214720 A (DAIKIN INDUSTRIES, LTD.) 19 December 2019, paragraphs [0029]-[0036], [0039], [0095] | 9-11 |
| Y | JP 2018-104565 A (PANASONIC CORP.) 05 July 2018, paragraphs [0022]-[0025], [0055]-[0064] | 9-11 |
| Y | JP 2019-504175 A (MEXICHEM FLUOR S. A. DE C. V) 14 February 2019, paragraphs [0031], [0048] | 9-11 |
| Y | JP 2009-24152 A (DAIKIN INDUSTRIES, LTD.) 05 February 2009, paragraph [0009] | 9-11 |
| P, A | JP 2020-2380 A (DAIKIN INDUSTRIES, LTD.) 09 January 2020, paragraph [0032] | 9-11 |

Form PCT/ISA/210 (continuation of second sheet) (January 2015)

INTERNATIONAL SEARCH REPORT

Information on patent family members

International application No.

PCT/JP2020/015260

| Patent Documents referred to in the Report | Publication Date | Patent Family | Publication Date |
|---|---|---|---|
| WO 2015/125884 A1 | 27.08.2015 | JP 2016-56340 A<br>US 2016/0355719 A1<br>paragraphs [0028]-[0097]<br>EP 3109302 A1<br>CN 106029821 A | |
| WO 2015/115252 A1 | 06.08.2015 | JP 2015-172182 A<br>US 2016/0333243 A1<br>paragraphs [0076]-[0105]<br>EP 3101082 A1<br>CN 106029821 A | |
| JP 2018-40517 A | 15.03.2018 | (Family: none) | |
| JP 2001-50685 A | 23.02.2001 | (Family: none) | |
| JP 2019-512031 A | 09.05.2019 | WO 2017/151488 A1<br>page 9, lines 18-27,<br>page 44, line 15 to<br>page 45, line 3<br>CN 108699428 A<br>KR 10-2018-0118174 A | |
| JP 2005-15633 A | 20.01.2005 | EP 1491608 A1<br>paragraph [0023] | |
| JP 2019-214720 A | 19.12.2019 | WO 2019/240205 A1 | |
| JP 2018-104565 A | 05.07.2018 | (Family: none) | |
| JP 2019-504175 A | 14.02.2019 | US 2018/0355269 A1<br>paragraphs [0045],<br>[0063]<br>WO 2017/098238 A1<br>KR 10-2018-0083385 A | |
| JP 2009-24152 A | 05.02.2009 | (Family: none) | |
| JP 2020-2380 A | 09.01.2020 | (Family: none) | |

Form PCT/ISA/210 (patent family annex) (January 2015)

**INTERNATIONAL SEARCH REPORT**

International application No.

PCT/JP2020/015260

This International Searching Authority found multiple inventions in this international application, as follows:

(Invention 1) Claims 1-8

Claims 1-8 have a special technical feature of "the mass ratios of the three components are within a range surrounded by: a first straight line joining a point A and a point B, point A indicating that R32, HFO1123, and R744 are 46 mass%, 54 mass% and 0 mass%, respectively and a point B indicating that R32, HFO1123, and R744 are 46 mass%, 37.2 mass%, and 16.8 mass%, respectively; a second straight line joining the point A and a point C, the point C indicating that R32, HFO1123, and R744 are 0 mass%, 100 mass%, and 0 mass%, respectively; a third straight line joining the point C and a point D, the point D indicating that R32, HFO1123, and R744 are 0 mass%, 85.7 mass%, and 14.3 mass%; and a first curved line joining the point B and the point D, and the mass ratios of all of the three components being greater than 0 mass%," and are therefore classified as invention 1.

(Invention 2) Claims 9-11

Claims 9-11 share with claim 1 classified as invention1 the feature of "comprising a refrigeration circuit including a compressor, an outdoor heat exchanger, an indoor heat exchanger, and an expansion valve, where the refrigeration circuit further includes refrigerant sealed therein, and the refrigerant contains at least three components: R32, HFO1123, and R744."

However, this feature is so well known that it is not necessary to submit any example thereof, and does not make a contribution over the prior art. As such, this feature cannot be said to be a special technical feature.

Moreover, no other identical or corresponding special technical feature exists between these inventions.

In addition, claims 9-11 are not dependent claims of claim 1.

Furthermore, claims 9-11 are not substantially identical to or similarly closely related to any of the claims classified as invention 1.

As such, claims 9-11 cannot be classified as invention 1.

Claims 9-11 do have a special technical feature of "relative to the total amount of the refrigerant, the ratio of the sum of R32 and R744 is 8-20 mass%, the ratio of HFO1123 is 50-70 mass%, and the ratio of CF31 is 10-30 mass%," and thus claims 9-11 are classified as invention 2.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015034296 A
- JP 2004198063 A